# EUROPEAN PATENT APPLICATION

(11) **EP 1 762 471 A2**
(43) Date of publication of application: **14.03.2007**
(21) Application number: 06120332.9
(22) Date of filing: 07.09.2006
(51) Int. Cl.: B62J 15/00

(54) **Mudguard system for a cycle**

(30) Priority: 07.09.2005 NL 1029894
(71) Applicant: Curana BVBA, 8800 Roeselare (BE)
(72) Inventor: Vens, Dirk, 8800 Roeselare (BE)
(74) Representative: Ostyn, Frans

(57) **Abstract**

The present invention relates, on the one hand, to a mudguard system (101) for a cycle (100), said mudguard system (101) comprising at least two couplable mudguard parts (11, 12, 18, 20) which are intended to be fixedly connected to one another in the coupled position. On the other hand, the invention relates to a mudguard part (11, 12, 18, 20) intended to form part of a mudguard system (101) of this type.

## Description

The present invention relates, on the one hand, to a mudguard system for a cycle. On the other hand, the present invention relates to a mudguard part intended to form part of a mudguard system of this type. The term mudguard part is to be understood as referring to an effective part of the mudguard extending over a front or rear wheel, that is to say no brackets or other auxiliary parts for fastening the mudguard parts to said front or rear wheel.

In order to catch spatters (of mud), two-wheeled cycles, such as for example, bicycles, mopeds and motorcycles, are provided with a front and/or rear mudguard at the front and/or rear. A generally known mudguard for bicycles is designed in the shape of an elongate bent strip made of panel-shaped or plastic material. The mudguard may be attached directly to the frame of the bicycle or is attached to the wheel shaft by means of attachment rods extending on either side of the wheel.

The mudguards of traditional mudguard systems, in particular the rear mudguards, have the drawback that they are relatively long, as a result of which the bottom easily breaks off at the point of attachment or near the mud flap. In order to replace such mudguards, the entire mudguard has to be removed. Replacing a mudguard takes a considerable amount of time, as, usually, the entire wheel (rear or front wheel), optionally the chain guard and any fitted coat guards have to be dismantled.

An additional drawback of long mudguards is the fact that they take up a considerable amount of space during transportation, storage or while on display in the shop. In order to solve this problem, relatively compact telescopic mudguards have been developed. Thus, it is known from, inter alia, American patent document US 6 659 483 to produce a telescopic mudguard comprising three displaceable parts which can be displaced relative to one another between a compact position (in which the individual parts are pushed over one another) and an extended position. The telescopic function also has the object of being able to make the mudguard on the bicycle itself more compact during times when it is not in use.

Similar mudguards are described in German patents DE 203074465 and DE 20304428, French patent FR 2845658 and furthermore in American patent US 2003/116937 and British patent GB 165,631.

However, the abovementioned mudguards have the disadvantage that the entire mudguard still needs to be replaced when it breaks, with all the consequences this entails. Furthermore, such telescopic mudguards do not conform to the classical design of a mudguard, as a result of which they cannot be used on traditional cycles.

US 1,112,478 describes an improved multipart mudguard for motor vehicles, the object of which is to simplify removal and replacement of the rear wheel, as in the case when a tyre or a wheel has to be repaired or when a new tyre is fitted. This object of the invention is achieved by providing a mudguard consisting of a fixed part which is supported by the bearing sections on the rear part of the frame, and a movable part which is also supported by this rear part of the frame. To this end, the top end of the fixed section is reduced and ends in an outer tube which has a convex curve. The movable section is of a size corresponding to the part of the fixed section, but is provided with a raised section provided with an inner groove for receiving the outer tube. The parts are connected to one another by means of bolts and nuts in such a manner that the fixed and the movable section cannot move with respect to one another.

NL 42 572 describes a rear mudguard for a cycle, which mudguard consists of at least two parts. This makes it possible to design each component separately in the required colour, for example white, in the most suitable manner. In this case, the mudguard parts are connected to one another using threaded bolts, so that the parts do not become detached and start rattling.

One disadvantage of the mudguard systems described in these patent documents is that they are limited to providing a solution for the problem regarding the rear mudguards.

It is an object of the invention to provide a mudguard system for a cycle which can be packaged in a compact manner and can easily and quickly be fitted to a cycle and/or dismantled from a cycle. It is another object of the invention to provide a versatile mudguard system for a cycle in which different colours or designs can be combined with one another in a simple manner.

The abovementioned objects of the invention are achieved by providing a mudguard system for a cycle, said mudguard system comprising at least two couplable mudguard parts which are intended to be fixedly connected to one another in the coupled position.

As a result, the entire mudguard does not have to be replaced when it breaks, but only a new mudguard part has to be placed on the already fitted mudguard part, without any other components of the cycle having to be dismantled. By providing a mudguard system consisting of various couplable mudguard parts which are intended to be fixedly connected to one another in the coupled position, it is furthermore possible to provide a much more compact packaging, as a result of which a significant amount of space can be saved. An additional advantage of this invention is the fact that the individual mudguard parts can be designed or coloured differently, so that a cycle manufacturer can give the mudguard system his own identity.

In a first preferred embodiment of a mudguard system according to the invention, the mudguard system comprises at least two mudguard parts which are intended to be fixedly connected to one another in the coupled position, with at least one of these two mudguard parts acting as a separate mudguard for both the front and the rear wheel.

In a first, more preferred embodiment of a mudguard system according to the invention, the mudguard system comprises two mudguard parts which are intended to be fixedly connected to one another in the coupled position, with one of these two mudguard parts acting as a separate mudguard.

In a second preferred embodiment of a mudguard system according to the invention, the mudguard system consists of at least three mudguard parts, comprising two couplable mudguard parts which are intended to be fixedly connected to one another in the coupled position, and a third mudguard part.

In a second, more preferred embodiment of a mudguard system according to the invention, one of these two couplable mudguard parts acts as a separate mudguard, and the other couplable mudguard part is omitted. This offers the advantage that these mudguard parts can be used as add-on mudguards on cycles which are supplied without mudguards as standard.

In a third preferred embodiment of a mudguard system according to the invention, the mudguard system consists of at least four mudguard parts, comprising two couplable mudguard parts which are intended to be fixedly connected to one another in the coupled position, a third mudguard part and one or more additional mudguard parts which are couplable to the first, second or third mudguard part and are intended to be fixedly connected to this first, second or third mudguard part in the coupled position.

In one preferred embodiment of a mudguard system according to the invention, at least two of said mudguard parts are of essentially equal length. In an advantageous embodiment of a mudguard system according to the invention, at least two of said mudguard parts are identical. This offers the advantage of lower investment costs and fewer different mudguard parts being required, thus resulting in fewer different mudguard parts having to be stocked.

In a preferred embodiment of a mudguard system according to the invention, all mudguard parts can be coupled to one another in order to be fixedly connected to one another in the coupled position. In this manner, all combinations of colours and designs of mudguard parts are possible.

In an advantageous embodiment of a mudguard system according to the invention, the couplable mudguard parts can be coupled to one another by means of a releasable connection. In a more advantageous embodiment of a mudguard system according to the invention, the couplable mudguard parts can be coupled to one another by means of a releasable click-fit connection. Examples of releasable connections are rivets, bolt and nut, etc. Examples of releasable click-fit connections are projections or elastically deformable parts which can click into a corresponding opening, etc.

In a preferred embodiment of a mudguard system according to the invention, one or more mudguard parts are made of metal, such as, inter alia, steel, stainless steel, aluminium, precoated metal.

In an advantageous embodiment of a mudguard system according to the invention, one or more mudguard parts are made of plastic. This plastic may, for example, consist of polypropylene, polycarbonate, ABS, etc. The couplable mudguard parts are preferably produced by using an extrusion process, injection-moulding process, plastic injection (optionally with gas injection). As the mudguard system consists of separate mudguard parts, a much smaller die is required than is the case with the known mudguards, resulting in a significant cost saving.

In a preferred embodiment of a mudguard system according to the invention, at least one of the couplable mudguard parts comprises a partly or completely integrated cycle component, or any other partly or completely integrated attachment means. A mudguard system of this type offers the advantage that it is simpler to attach cycle components or other attachment means to the cycle than when these have to be attached to the cycle separately. Furthermore, a design produced by the cycle manufacturer requires less investment than a design of the mudguard as a single entity.

In a more preferred embodiment of a mudguard system according to the invention, at least one of the mudguard parts comprises an integrated attachment rod, which is provided in order to attach said mudguard part to the cycle.

In a more preferred embodiment of the mudguard system according to the invention, at least one of the mudguard parts comprises a partly or completely integrated coat guard.

In a very advantageous embodiment of the mudguard system according to the invention, at least one of the mudguard parts comprises a partly or completely integrated luggage carrier attachment onto which the luggage carrier can quickly and easily be fitted. Currently, a luggage carrier is always attached to the upright rear stays of the cycle. In order to compensate for the various frame heights of the cycles, an adjustable connection between luggage carrier and frame is necessary, which requires additional components and an additional fitting procedure. This also weakens the connection. This problem is solved by this invention by providing, in a more particular embodiment of the mudguard, an integrated luggage carrier attachment on at least one of the couplable mudguard parts. By using the mudguard part as an attachment point for the luggage carrier, a fixed attachment point is obtained, irrespective of the frame geometry.

In a preferred embodiment of a mudguard system according to the invention, at least one of the mudguard parts comprises a partly or completely integrated luggage carrier.

The mudguard parts can also be provided with other attachment means or auxiliary means. Thus, a mudguard part can be provided with an integrated mud flap or any other integrated attachment means.

It should be noted, that a cycle can be provided with a mudguard system in which at least one of the couplable mudguard parts can comprise a partly or completely integrated cycle component, or any other partly or completely integrated attachment means, without provision having to be made for a mudguard system comprising at least two mudguard parts which are intended to be fixedly connected to one another in the coupled position, and in which at least one of these two mudguard parts acts as a separate mudguard for both the front and the rear wheel, and vice versa. However, a cycle can be provided with a combination of both abovementioned facilities.

The objects of the invention are furthermore achieved in that a mudguard part is provided which is intended to form part of a mudguard system as described above.

In the following description, a detailed description of a number of possible embodiments of a mudguard system according to the present invention is given with reference to the attached drawings, with the sole purpose of clarifying and complementing the features of the invention. This description can therefore not be interpreted in any way as a limitation of the protective scope for this invention defmed in the claims.

The drawings referred to in this description are:
- Fig. 1, showing a bicycle provided with a mudguard system according to the prior art, consisting of a front mudguard and a rear mudguard made in one piece;
- Fig. 2, showing a bicycle provided with a mudguard system according to the invention, consisting of a front mudguard made in one part and a rear mudguard made in two parts, and in which the front mudguard and the rear mudguard are different;
- Fig. 3, showing a bicycle provided with a front mudguard and one part of the rear mudguard of a mudguard system according to the invention, as illustrated in Fig. 2;
- Fig. 4, showing a bicycle with one of the parts of the rear mudguard of a mudguard system according to the invention being provided with an optionally completely integrated coat guard;
- Fig. 5, showing a bicycle with a first part of the rear mudguard of a mudguard system according to the invention being provided with a luggage carrier attachment;
- Fig. 6, showing a bicycle with a first part of the rear mudguard of a mudguard system according to the invention being provided with a luggage carrier attachment and a second part of the rear mudguard of a mudguard system according to the invention being an assembly made up of a luggage carrier and a mudguard part;
- Fig. 7, showing a bicycle provided with a rear mudguard and a front mudguard of a mudguard system according to the invention which both comprise an integrated attachment rod;
- Fig. 8, showing a bicycle provided with a rear mudguard and a front mudguard of a mudguard system according to the invention which are both provided with an integrated attachment rod and in which the space between this attachment rod and the mudguard section is open;
- Fig. 9, showing a bicycle provided with a rear mudguard and a front mudguard of a mudguard system according to the invention which are both provided with an integrated attachment rod and in which the space between this attachment rod and the mudguard section is closed in order to form an integrated coat guard;
- Fig. 10, showing a bicycle provided with a rear mudguard and a front mudguard of a mudguard system according to the invention which are both provided with an integrated attachment rod, in which a coat guard is integrated in one of the two parts of the rear mudguard, and in which at least two additional parts are provided in order to form a complete mudguard.

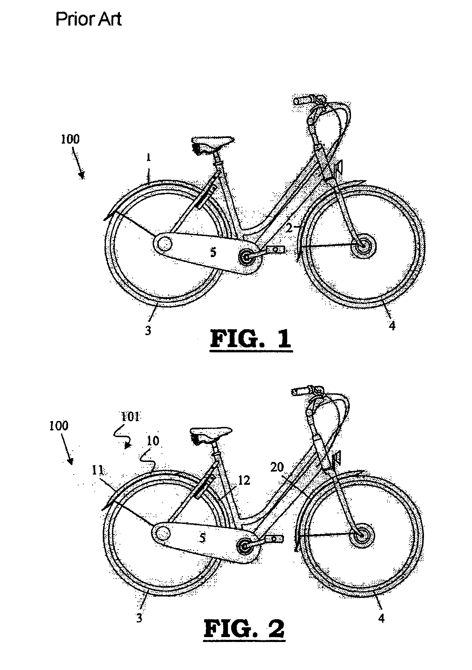

A mudguard system according to the prior art consists of a rear and front mudguard (1, 2), as illustrated in Fig. 1, both of which are formed as a single part, as mentioned above. As mentioned above, the drawbacks of such mudguards (1) are that with such conventional mudguards (1, 2), in particular with the rear mudguards (2), these are relatively long, as a result of which the bottom easily breaks off at the point of attachment or near the mud flap. In order to replace such mudguards (1, 2), the entire mudguard (1, 2) has to be removed. Replacing a mudguard (1, 2) takes a considerable amount of time, as, usually, the entire wheel (3, 4) has to be removed. When a rear mudguard (2) has to be replaced, the chain guard (5) and any fitted coat guards also have to be dismantled.

In order to solve these problems, a mudguard (10) according to the invention is provided, as illustrated in the Figs. 2 to 10, with said mudguard (10) comprising at least two couplable mudguard parts (11, 12, 18, 20) which are fixedly connected to one another in the coupled position. The couplable mudguard parts (11, 12, 18, 20) can be coupled to one another by means of a releasable connection, more particularly a releasable click-fit connection. Examples of releasable connections are rivets, bolt and nut, etc. Examples of releasable click-fit connections are projections (e.g. pins) or elastically deformable parts which can click into a corresponding opening. The coupling is selected on the basis of the application and positioning of the mudguard system (101).

As illustrated in Figs. 2 to 9, the mudguard system (101) according to the invention may consist of at least three mudguard parts (11, 12, 20) comprising two couplable mudguard parts (11, 12) which are intended in order to be fixedly connected to one another in the coupled position, and a third mudguard part (20) In Fig. 2, the two couplable mudguard parts (11, 12) act as rear mudguard, while the third mudguard part (20) made in one part acts as front mudguard.

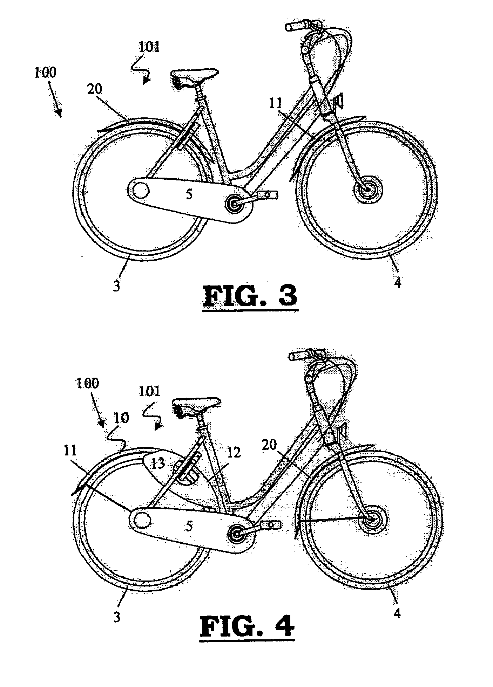

As illustrated in Fig. 3, the mudguard system (101) according to the invention may consist of two mudguard parts (11, 12). In Fig. 3 at least one of the couplable mudguard parts (11 or 12) in Fig. 2, and in Fig. 3 mudguard part 11, acts as a separate mudguard, namely as the front mudguard. The front mudguard (20) from Fig. 2 in this case serves as rear mudguard.

Another possibility of using two mudguard parts, which is not shown in Fig. 3, is for a first mudguard part (11), which forms part of a mudguard system (101) normally comprising two mudguard parts (11, 12) which are intended to be fixedly connected to one another in the coupled position, to be used as front mudguard or rear mudguard, respectively, while the second mudguard part (12) is used as rear mudguard or front mudguard, respectively.

In order to arrange the mudguard parts (11, 12, 20) over the front and rear wheels (4, 3), attachment means are preferably provided, for example in the form of a click-fit system. With such an embodiment of a mudguard system (101) according to the invention, these two mudguard parts (11, 12, 20) are used as add-on mudguard, which is useful mainly for bicycles which are supplied without mudguards as standard, as is the case, for example, with mountain bikes, cross bikes, etc., and where a relatively short mudguard may optionally be fitted to the bicycle retrospectively by the consumer, for example by means of a click-fit connection, depending on the weather situation.

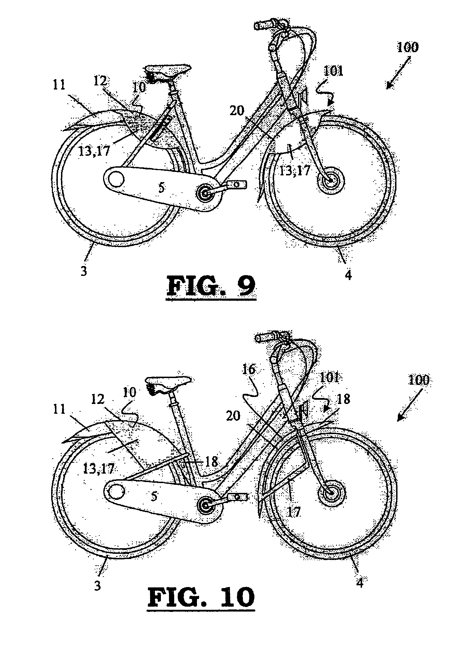

As illustrated in Fig. 10, the mudguard system (101) according to the invention may also comprise at least four mudguard parts (11, 12, 18, 20), comprising two couplable mudguard parts (11, 12) which are intended to be fixedly connected to one another in the coupled position, a third mudguard part (20) and one or more additional mudguard parts (18) which are couplable to the first, second or third mudguard part (11, 12, 20) and are intended to be fixedly connected to this first, second or third mudguard part (11, 12, 20) in the coupled position. The rear mudguard (10) of Fig. 9 is made up of three parts, i.e. two couplable mudguard parts (11, 12) and an additional mudguard part (18), and the front mudguard (16) is made up of two parts, i.e. a mudguard part (20) and an additional mudguard part (18). It is equally possible to provide a number of additional couplable mudguard parts (18).

In the above-described embodiments of a mudguard system (101) according to the invention, preferably two of said mudguard parts (11, 12, 18, 20) are of essentially equal length. More preferably, at least two of said mudguard parts (11, 12, 18, 20) are identical.

The mudguard parts (11, 12, 18, 20) are made of metal, such as, inter alia, steel, stainless steel, aluminium, precoated metal, etc. On the other hand, the couplable mudguard parts (11, 12) may be made of plastic, such as, for example, polypropylene, polycarbonate, ABS, etc. The couplable mudguard parts (11, 12) may be produced by using an extrusion process, injection-moulding process, plastic injection (optionally with gas injection).

By providing the mudguard system (101) according to the invention, it is possible to provide at least one of the mudguard parts (11, 12, 18, 20) with an integrated cycle component, or any other integrated attachment means.

Thus, Fig. 4 shows a bicycle (100) of the kind shown in Fig. 2, but in this case, the second mudguard part (12) of the rear mudguard (10) is provided with a partly or completely integrated coat guard (13).

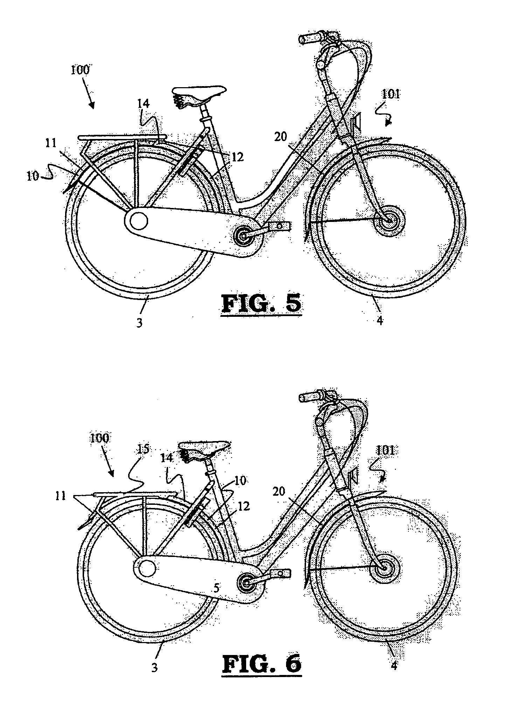

In Fig. 5, the second mudguard part (12) of the rear mudguard (10) is provided with a luggage carrier attachment (14).

In Fig. 6, the second mudguard part (12) of the rear mudguard (10) is provided with a luggage carrier attachment (14), while the first mudguard part (11) of the rear mudguard (10) is provided with an integrated luggage carrier (15). The first mudguard part (11) is thus an assembly of a luggage carrier (15) and a mudguard part.

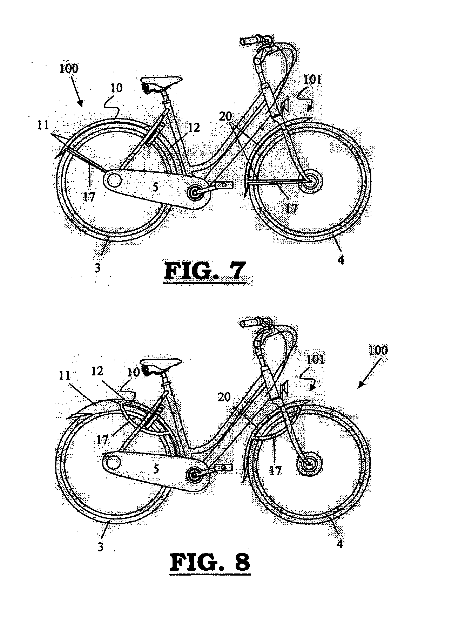

In Fig. 7, the first mudguard part (11) of the rear mudguard (10) and the third mudguard part (20) which acts as front mudguard are identical, and these mudguard parts (11, 20) are provided with an integrated attachment rod (17).

In Figs. 8 and 9, the second mudguard part (12) of the rear mudguard (10) and the third mudguard part (20) which acts as front mudguard (20) are identical, and these are provided with an attachment rod (17) (which differs from the attachment rod of Fig. 7). The space between the integrated attachment rod (17) and the respective mudguard part (12, 20) may be open, as is illustrated in Fig. 8, or may be closed, as is illustrated in Fig. 9, in which latter case, this results in the second and third mudguard parts (12, 20) immediately having a coat guard (13).

In Fig. 10, the second mudguard part (12) of the rear mudguard (10) is provided with an integrated attachment rod (17) and with an integrated coat guard (13), and the third mudguard part (20) which acts as front mudguard is provided with an integrated attachment rod (17).

Although the cycle illustrated in Figs. 2 to 10 is a bicycle (100) in each case, the mudguard (10) according to the invention can also be used on mopeds and motorcycles, which are provided with a mudguard (10) at the front and/or rear.

## Claims

1. Mudguard system (101) for a cycle (100), **characterized in that** said mudguard system (101) comprises at least two couplable mudguard parts (11, 12, 18, 20) which are intended to be fixedly connected to one another in the coupled position.

2. Mudguard system according to Claim 1, **characterized in that** the mudguard system (101) comprises at least two mudguard parts (11, 12) which are intended to be fixedly connected to one another in the coupled position, with at least one of these two mudguard parts (11, 12) acting as a separate mudguard.

3. Mudguard system according to Claim 2, **characterized in that** the mudguard system (101) comprises two mudguard parts (11, 12) which are intended to be fixedly connected to one another in the coupled position, with one of these two mudguard parts (11, 12) acting as a separate mudguard.

4. Mudguard system according to Claim 2, **characterized in that** the mudguard system (101) consists of at least three mudguard parts (11, 12, 20), comprising two couplable mudguard parts (11, 12) which are intended to be fixedly connected to one another in the coupled position, and a third mudguard part (20).

5. Mudguard system according to Claim 4, **characterized in that** one of these two couplable mudguard parts (11 or 12) acts as a separate mudguard, while the other couplable mudguard part (12 or 11) is omitted.

6. Mudguard system according to Claim 2, **characterized in that** the mudguard system (101) consists of at least four mudguard parts (11, 12, 18, 20), comprising two couplable mudguard parts (11, 12) which are intended to be fixedly connected to one another in the coupled position, a third mudguard part (20) and one or more additional mudguard parts (18) which are couplable to the first, second or third mudguard part (11, 12, 20) and are intended to be fixedly connected to this first, second or third mudguard part (11, 12, 20) in the coupled position.

7. Mudguard system according to one of the preceding claims, **characterized in that** at least two of said mudguard parts (11, 12, 18, 20) are of essentially equal length.

8. Mudguard system according to Claim 7, **characterized in that** at least two of said mudguard parts (11, 12, 18, 20) are identical.

9. Mudguard system according to one of Claims 4 to 8, **characterized in that** all mudguard parts (11, 12, 18, 20) can be coupled to one another in order to be fixedly connected to one another in the coupled position.

10. Mudguard system according to one of Claims 1 to 9, **characterized in that** the couplable mudguard parts (11, 12, 18, 20) can be coupled to one another by means of a releasable connection.

11. Mudguard system according to Claim 10, **characterized in that** the couplable mudguard parts (11, 12, 18, 20) can be coupled to one another by means of a releasable click-fit connection.

12. Mudguard system according to one of the preceding claims, **characterized in that** one or more mudguard parts (11, 12, 18, 20) are made of metal.

13. Mudguard system according to one of Claims 1 to 12, **characterized in that** one or more mudguard parts (11, 12, 18, 20) are made of plastic.

14. Mudguard system according to Claim 13, **characterized in that** one or more mudguard parts (11, 12, 18, 20) are produced by using an extrusion process, injection-moulding process or plastic injection (optionally with gas injection).

15. Mudguard system according to one of Claims 1 to 14, **characterized in that** at least one of the mudguard parts (11, 12, 18, 20) comprises an integrated cycle component, or any other partly or completely integrated attachment means.

16. Mudguard system according to Claim 15, **characterized in that** at least one of the mudguard parts (11, 12, 18, 20) comprises a partly or completely integrated attachment rod (17), which is provided in order to attach said mudguard part (11, 12, 18, 20) to the cycle.

17. Mudguard system according to Claim 15 or 16, **characterized in that** at least one of the mudguard parts (11, 12, 18, 20) comprises a partly integrated coat guard (13).

18. Mudguard system according to Claim 15 or 16, **characterized in that** at least one of the mudguard parts (11, 12, 18, 20) comprises a completely integrated coat guard (13).

19. Mudguard system according to one of Claims 15 to 18, **characterized in that** at least one of the mudguard parts (11, 12, 18, 20) comprises a partly or completely integrated luggage carrier attachment (14).

20. Mudguard system according to one of Claims 15 to 19, **characterized in that** at least one of the mudguard parts (11, 12, 18, 20) comprises a partly or completely integrated luggage carrier (15).

21. Mudguard part (11, 12, 18, 20) intended to form part of a mudguard system (101) according to one of Claims 1 to 20.
